# EUROPÄISCHE PATENTSCHRIFT

(11) **EP 1 332 301 B1**
(45) Veröffentlichungstag und Bekanntmachung des Hinweises auf die Patenterteilung: **11.07.2007**
(21) Anmeldenummer: 01992844.9
(22) Anmeldetag: 23.10.2001
(51) Int. Cl.: F16D 65/21

(54) **MODUL EINER ELEKTROMECHANISCH BETÄTIGBAREN SCHEIBENBREMSE UND SCHEIBENBREMSE MIT EINEM SOLCHEN MODUL**
MODULE OF AN ELECTROMECHANICALLY ACTUATED DISC BRAKE AND A DISC BRAKE COMPRISING A MODULE OF THIS TYPE
MODULE D'UN FREIN A DISQUE A COMMANDE ELECTROMECANIQUE ET FREIN A DISQUE DOTE D'UN MODULE DE CE TYPE

(30) Priorität: 06.11.2000 DE 10054938
(43) Veröffentlichungstag der Anmeldung: 06.08.2003
(73) Patentinhaber: PACIFICA GROUP TECHNOLOGIES PTY LTD, Victoria, 3165 (AU)
(72) Erfinder: LIEBL, Martina, 93053 Regensburg (DE); MOHR, Volker, 93051 Regensburg (DE)
(74) Vertreter: Vossius, Volker
(86) Internationale Anmeldenummer: PCT/DE2001/004032
(87) Internationale Veröffentlichungsnummer: WO 2002/036982

(56) Entgegenhaltungen:
- EP-A- 1 203 895
- WO-A-00/02302
- WO-A-02/36398
- DE-A- 19 519 310
- US-A- 4 865 162
- US-A- 6 098 762

## Beschreibung

Modul einer elektromechanisch betätigbaren Scheibenbremse und Scheibenbremse mit einem solchen Modul

Die Erfindung betrifft ein Modul einer elektromechanisch betätigbaren Scheibenbremse und eine Scheibenbremse mit einem solchen Modul.

Eine elektromechanisch betätigbare Scheibenbremse ist beispielsweise in DE 196 29 936 offenbart. Die Scheibenbremse weist einen als Schwimmsattel ausgebildeten Bremssattel auf. Im Schwimmsattel sind zwei Bremsbeläge angeordnet die zum Bremsen einer Bremsscheibe an die Bremsscheibe beidseitig angedrückt werden. An einen Bremsbelag grenzt ein Bremskolben an, der senkrecht zur Bremsscheibe verschiebbar angeordnet ist. Die Scheibenbremse weist ferner einen Elektromotor mit einem Rotor auf. Die Drehbewegung des Rotors wird mit mechanischen Mitteln in eine Linearbewegung des Betätigungselements umgewandelt.

Bei der Herstellung der Scheibenbremse werden in der Regel zunächst Module der Scheibenbremse erzeugt und anschließend zusammengesetzt. Verschiedene Module können von verschiedenen Zulieferern bezogen werden und anschließend zusammengesetzt werden. Die Module sollten vor der Zusammensetzung auf ihre Funktionsfähigkeit überprüft werden.

Die Module sind in der Regel jeweils in einem mindestens einstückig ausgebildeten Gehäuseteil angeordnet. Die Anzahl der benötigten Gehäuseteile der Scheibenbremse ist abhängig von der Reihenfolge und der Größen der benötigten Bauteile sowie von den Stellen an denen die Bauteile gelagert werden müssen. Je weniger Gehäuseteile und damit Module benötigt werden, umso weniger Prüfungen sind erforderlich zur Feststellung der Funktionsfähigkeit der gesamten Scheibenbremse.

Auch der Aufwand der Montage der Scheibenbremse verringert sich mit abnehmender Zahl der Module.

In DE 196 29 936 ist eine Scheibenbremse mit mindestens drei Modulen offenbart. An einer Seite eines Gehäusebodenteils ist eine elektronische Regelungseinheit der Scheibenbremse angeordnet. An der gegenüberliegenden Seite des Gehäusebodenteils sind eine Sensorik und ein Lager für den Rotor des Elektromotors angeordnet. Der Rotor ist als Spindelmutter ausgestaltet, so dass die Drehung des Rotors in eine Linearbewegung einer Spindel umgewandelt wird. Ein anderes Lager für den Rotor ist in einem Motorgehäuseteil montiert. Die Axialkraft der Spindel wird über einen Hebelmechanismus übersetzt und um ein Vielfaches verstärkt und auf den Bremskolben übertragen. Der Bremskolben ist in einem Bremssattelgehäuseteil angeordnet. Der Hebelmechanismus ist teilweise zwischen dem Motorgehäuseteil und dem Bremssattelgehäuseteil angeordnet. Nachteilig an dieser Scheibenbremse ist zum einen, dass sie aus vielen Modulen besteht und das zumindest ein Modul von zwei Seiten her bearbeitet wird. Zum anderen ist die Anbringung des Hebelmechanismus zwischen zwei aneinander grenzenden Modulen aufwendig und kompliziert.

US-A-9 865 162 zeigt eine Scheibenbremse mit zwei modulen, wobei der Elektromotor im Gehäuse integriert ist.

Der Erfindung liegt die Aufgabe zugrunde, eine Scheibenbremse anzugeben, deren Funktionsfähigkeit im Vergleich zum Stand der Technik leicht überprüft werden kann und die im Vergleich zum Stand der Technik weniger Module aufweist. Ferner soll ein Modul einer solchen Scheibenbremse angegeben werden.

Die Aufgabe wird gelöst durch ein Modul bzw. eine Scheibenbremse mit einem Modul, das folgende Merkmale aufweist: Das Gehäuse des Moduls wird durch einen einstückig ausgebildeten Deckel eines Bremssattels gebildet. Am Boden des Deckels ist ein Elektromotor montiert, der einen Rotor aufweist, der mit einem Ende um eine erste Achse drehbar am Boden des Deckels gelagert ist, wobei die erste Achse im Wesentlichen senkrecht zum Boden des Deckels verläuft, sowie mit einem Stator, der mit dem Deckel fest verbunden ist. Ein erster Teil eines Spindelgetriebes ist am Deckel um eine zweite Achse drehbar, aber nicht verschiebbar gelagert, wobei das Lager dieses ersten Teils mit dem Boden des Deckels fest verbunden ist. Die zweite Achse verläuft im Wesentlich senkrecht zum Boden des Deckels und ist von der ersten Achse beabstandet. Das Modul weist ein Stirnradgetriebe zum Umwandeln der Drehbewegung des Rotors in eine Drehbewegung des ersten Teils des Spindelgetriebes auf.

Die Scheibenbremse weist ein Gehäuseteil des Bremssattels auf, das mit dem Deckel verbunden ist. Im Gehäuseteil sind zwei Bremsbeläge angeordnet. Ein Betätigungselement der Scheibenbremse, das mindestens durch einen zweiten Teil des Spindelgetriebes gebildet wird, ist durch Drehung des ersten Teils des Spindelgetriebes in eine Linearbewegung entlang der ersten Achse versetzbar. Das Betätigungselement grenzt an einen der Bremsbeläge an, so dass eine Linearbewegung des Betätigungselements auf den Bremsbelag übertragen wird.

Sämtliche mechanische Bauteile, die zur Verschiebung des Betätigungselements und damit zum Bremsen erforderlich sind, sind in einem einzigen Modul angeordnet. Folglich kann die Funktionsfähigkeit der wichtigsten Teile der Scheibenbremse durch Testen eines einzigen Moduls überprüft werden. Die Montage der Scheibenbremse ist besonders einfach, da neben dem Modul nur ein weiteres Gehäuseteil erforderlich ist. Auch sind keine schwierig zu plazierende Bauteile zwischen dem Gehäuseteil und dem Deckel vorgesehen. Die Herstellung des Moduls ist besonders einfach, da sämtliche Bauteile von einer Richtung her in den Deckel montiert werden können.

Die Montage aller wichtigen mechanischen Bauteile in einem einzigen Modul wird ermöglicht durch die Parallelanordnung des Elektromotors und des ersten Teils des Spindelgetriebes und damit des Betätigungselements. Durch die Übermittlung der Drehbewegung des Rotors auf den ersten Teil des Spindelgetriebes mittels eines Stirnradgetriebe bleiben der Elektromotor und der erste Teil des Spindelgetriebes vom Boden des Deckels her zugänglich.

Vorzugsweise sind eine Sensorik und eine elektronische Regelungseinheit am Boden des Deckels montiert. In diesem Fall sind neben den wichtigsten mechanischen Bauteilen der Scheibenbremse auch die elektrischen Teile der Scheibenbremse im selben Modul angeordnet und können geprüft werden.

Das Stirnradgetriebe besteht beispielsweise aus einem Rotorzahnrad, das auf dem Rotor angeordnet ist, und einem Spindelgetriebezahnrad, das auf dem ersten Teil des Spindelgetriebes angeordnet ist. Das Rotorzahnrad kann in das Spindelgetriebezahnrad eingreifen.

Zur Verringerung der erforderlichen Antriebskraft des Elektromotors ist es vorteilhaft, wenn das Stirnradgetriebe als Übersetzungsgetriebe ins Langsame ausgebildet ist. Dazu weist das Stirnradgetriebe beispielsweise ein erstes Zwischenzahnrad und ein zweites Zwischenzahnrad auf. Das erste Zwischenzahnrad sollte einen größeren Durchmesser aufweisen als das Rotorzahnrad und in das Rotorzahnrad eingreifen. Das zweite Zwischenzahnrad, das in das Spindelgetriebezahnrad eingreift, sollte einen kleineren Außendurchmesser aufweisen als das Spindelgetriebezahnrad.

Das erste Zwischenzahnrad und das zweite Zwischenzahnrad sind auf derselben Zwischenwelle angeordnet und drehfest miteinander verbunden. Die Zwischenwelle ist am Boden des Deckels gelagert. Die Achse der Zwischenwelle verläuft parallel zur ersten Achse und zur zweiten Achse.

Das Betätigungselement kann bereits in das Modul eingesetzt sein. Das Modul kann jedoch größtenteils auch ohne Betätigungselement getestet werden.

Das Betätigungselement besteht beispielsweise zumindest teilweise aus der Spindel oder aber aus der Spindelmutter. Das Betätigungselement weist beispielsweise einen Bremskolben auf, der mit dem ersten Teil des Spindelgetriebes verbunden ist.

Die Sensorik der Scheibenbremse kann einen Kraftsensor aufweisen, der zwischen dem Lager des ersten Teils des Spindelgetriebes und dem Boden des Deckels angeordnet ist und derart ausgelegt ist, dass er die Kraft misst, die das Lager des ersten Teils des Spindelgetriebes auf den Boden des Deckels ausübt. Beispielsweise ist der Kraftsensor als kapazitives Element ausgestaltet, dessen Plattenabstandsänderung gemessen wird. Durch den Kraftsensor soll die Kraft bestimmt werden, die der Bremsbelag auf die Bremsscheibe ausübt.

Die Sensorik kann auch einen Elektromotorrotorlagegeber aufweisen, der die Lage des Rotors bestimmt und an die Regelungseinheit weiter gibt.

Die Regelungseinheit kann eine Platine sein, die am Boden des Deckels montiert ist. Alternativ kann die Regelungseinheit in Hybridtechnologie hergestellt sein.

Da alle stromführende Teile der Scheibenbremse - darunter auch der Stator des Elektromotors - am Boden des Deckels montiert sind und nicht quer in der Scheibenbremse verstreut angeordnet sind, können sämtliche elektrische Leitungen kurz sein und statisch angeordnet sein.

Der Bremssattel der Scheibenbremse kann als Schwimmsattel ausgebildet sein. Beispielsweise weist die Scheibenbremse einen Halter auf, der mindestens einen Sattelführungsbolzen aufweist, entlang der der Schwimmsattel verschiebbar gelagert ist.

Zur Verringerung des Platzbedarfs zur Scheibenbremse ist es vorteilhaft, wenn der Rotor des Elektromotors zumindest teilweise koaxial um den Sattelführungsbolzen angebracht ist.

Am Gehäuseteil der Scheibenbremse kann ein weiteres Lager montiert sein, an dem der Rotor mit einem anderen Ende gelagert ist.

Im Folgenden wird ein Ausführungsbeispiel der Erfindung anhand der Figuren näher erläutert.
- Figur 1: zeigt einen Querschnitt durch eine erste Scheibenbremse mit einem Bremssattel, einem Halter, einem Bremsbelag, einem weiteren Bremsbelag, einer Felge, einem Bremskolben, einer Spindelmutter, einer Spindel, einem Stator, einem Rotor, einem Rotorzahnrad, einem Spindelzahnrad, einem Sattelführungsbolzen, einem weiteren Sattelführungsbolzen, einem ersten Lager für den Rotor, einem zweiten Lager für den Rotor, einem Lager für die Spindel, einem Elektromotorrotorlagegeber, einem Kraftsensor, elektrischen Leitungen und einer Platine. Ferner ist eine zu bremsende Bremsscheibe dargestellt.
- Figur 2: zeigt eine schematische Seitenansicht eines Stirnradgetriebes der ersten Scheibenbremse mit dem Rotorzahnrad, dem Spindelzahnrad, einem ersten Zwischenzahnrad und einem zweiten Zwischenzahnrad.
- Figur 3: zeigt eine Explosionsdarstellung der ersten Scheibenbremse, in der der Bremssattel, der Halter, der Stator, der Rotor, der Bremskolben, eine Zwischenwelle des ersten Zwischenzahnrads und des zweiten Zwischenzahnrads, das zweite Zwischenzahnrad und ein Deckel gezeigt sind.
- Figur 4: zeigt eine zweite Explosionsdarstellung der Scheibenbremse, in der der Schwimmsattel, der Halter, das Gehäuseteil und der Deckel dargestellt sind.

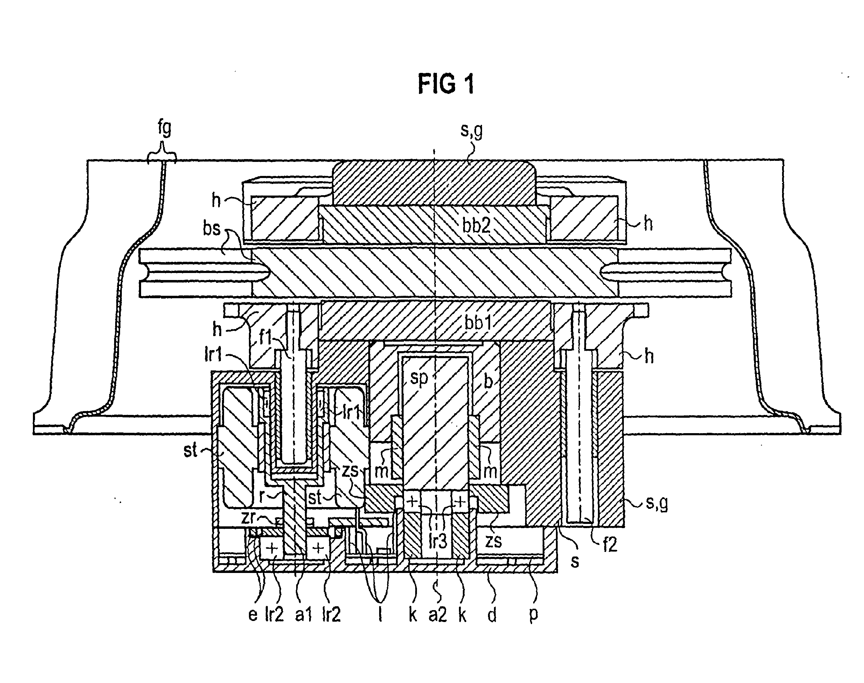

Im Ausführungsbeispiel ist eine erste Scheibenbremse vorgesehen, die einen als Schwimmsattel ausgestalteten Bremssattel s und einen Halter h aufweist. Der Halter h weist einen Sattelführungsbolzen f1 und einen weiteren Sattelführungsbolzen f2 auf, entlang denen der Bremssattel s verschiebbar gelagert ist (siehe Figur 1).

Die erste Scheibenbremse weist eine Betätigungseinheit auf, die in einem Deckel d des Bremssattels s montiert ist. Die Betätigungseinheit weist einen Elektromotor auf mit einem Rotor r und einem Stator st. Ein erster Teil des Rotors r ist koaxial um den Sattelführungsbolzen f1 angebracht (siehe Figur 1). Ein zweiter Teil des Rotors r, der an den ersten Teil des Rotors r angrenzt, ist axial versetzt zum Sattelführungsbolzen f1 angeordnet. Der zweite Teil des Rotors r weist einen kleineren Außendurchmesser auf, als der erste Teil des Rotors r. Am zweiten Teil des Rotors r ist ein Rotorzahnrad zr angebracht, das einen kleineren Außendurchmesser aufweist als der erste Teil des Rotors r (siehe Figur 1).

Der erste Teil des Rotors r ist an einem ersten Lager lrl gelagert, das an einem Gehäuseteil g des Bremssattels s angeordnet ist. Der zweite Teil des Rotors ist mittels eines zweiten Lagers lr2 am Boden des Deckels d um eine erste Achse a1 drehbar gelagert.

Der Stator st des Elektromotors ist um den Rotor r angeordnet und mit dem Deckel d fest verbunden.

Die Betätigungseinheit weist ein Betätigungselement bestehend aus einer Spindelmutter m und einem Bremskolben b auf. Die Spindelmutter m ist mit dem Bremskolben b fest verbunden. Der Bremskolben b grenzt an einen Bremsbelag bb1 an. Das Betätigungselement dient dem Verschieben des Bremsbelags bb1 gegenüber dem Bremssattel s.

Die Betätigungseinheit weist ferner eine Spindel sp auf, die am Deckel d um eine zweite Achse a2 drehbar aber nicht verschiebbar gelagert ist. Die zweite Achse a2 verläuft im wesentlichen senkrecht zum Boden des Deckels d und ist von der ersten Achse a1 beabstandet. Das Lager lr3 der Spindel sp ist mit dem Boden des Deckels d verbunden. Als Bindeglied dient ein Kraftsensor k. An der Spindel sp ist ein Spindelgetriebezahnrad zs angeordnet.

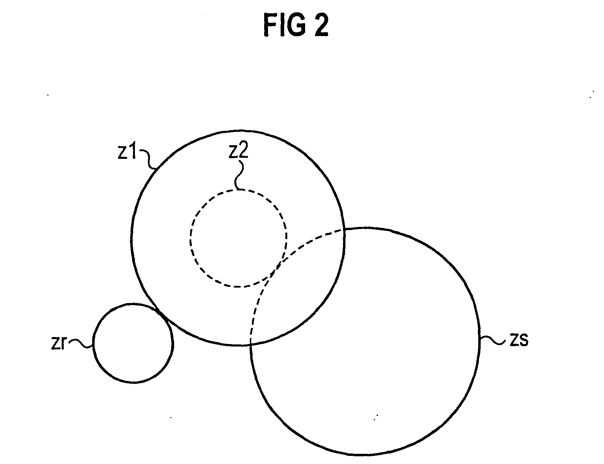

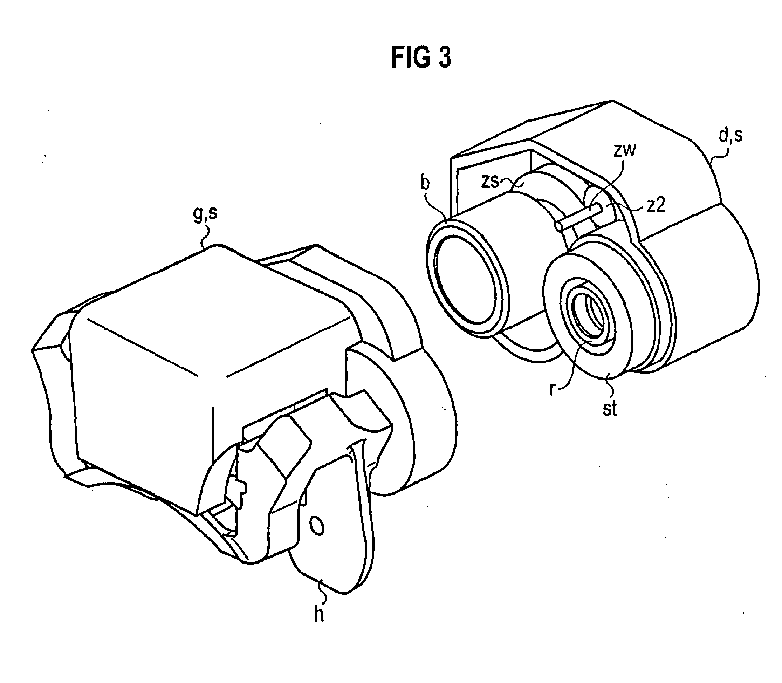

Die Betätigungseinheit weist ein Stirnradgetriebe auf, zu dem das Rotorzahnrad r und das Spindelgetriebezahnrad zs gehören. Das Stirnradgetriebe besteht ferner aus einem ersten Zwischenzahnrad z1 und einem zweiten Zwischenzahnrad z2. Der Übersichtlichkeit halber sind das erste Zwischenzahnrad z1 und das zweite Zwischenzahnrad z2 in der Figur 1 nicht dargestellt. Das erste Zwischenzahnrad z1 und das zweite Zwischenzahnrad z2 sind an derselben Zwischenwelle zw angeordnet (siehe Figuren 2 und 3). Die Zwischenwelle zw ist am Deckel d gelagert. Das erste Zwischenzahnrad z1 weist einen größeren Außendurchmesser auf als das zweite Zwischenzahnrad z2 und als das Rotorzahnrad zr und greift in das Rotorzahnrad zr ein. Das zweite Zwischenzahnrad z2 greift in das Spindelzahnrad zs ein.

Der Bremssattel s weist einen Vorsprung auf, an den ein weiterer Bremsbelag bb2 angrenzt. Eine zu bremsende Bremsscheibe wird zwischen dem Bremsbelag bb1 und dem weiteren Bremsbelag bb2 angeordnet. Zum Bremsen der Bremsscheibe bs wird der Elektromotor derart angesteuert, dass aufgrund der Drehbewegung des Rotors r die Spindelmutter m und der Bremskolben b Richtung Bremsscheibe bs verschoben werden. Dadurch wird der Bremsbelag bb1 ebenfalls Richtung Bremsscheibe bs bewegt. Aufgrund der Kraft, die die Bremsscheibe bs auf den Bremsbelag bb1 ausübt, wird der Bremssattel s entlang dem Sattelführungsbolzen f1 und dem weiteren Sattelführungsbolzen f2 bezüglich dem Halter h verschoben, wodurch der Vorsprung des Bremssattels s und dadurch der weitere Bremsbelag bb2 ebenfalls Richtung Bremsscheibe bs verschoben werden. Dadurch wirkt die Bremskraft gleichmäßig auf beide Seiten der Bremsscheibe bs.

Die Scheibenbremse weist zur Steuerung des Elektromotors bzw. Regelung der Scheibenbremse eine Platine p auf, die am Deckel d montiert ist (siehe Figur 1).

Der Kraftsensor k dient der Messung der Kraft, die die Scheibenbremse auf die Bremsscheibe bs ausübt. Der Kraftsensor k misst somit die Kraft, die die Spindel sp auf den Deckel d ausübt, wobei die Kraft von der Bremsscheibe bs auf den Bremskolben b, vom Bremskolben b auf die Spindelmutter m und von dort auf die Spindel sp übertragen wird.

Ebenfalls mit dem Deckel d verbunden ist ein Elektromotorrotorlagegeber e, der die Drehung des Rotors r erfasst und zur Platine p leitet. Elektrische Leitungen 1 zum Stator st des Elektromotors sind mit der Platine p verbunden.

Die Spindelmutter m mit dem Bremskolben b ist um die Spindel sp geschraubt, so daß die Spindelmutter m und der Bremskolben b ebenfalls letzten Endes am Deckel d montiert sind. Der Deckel d mit der darin montierten Betätigungseinheit bilden ein Modul der Scheibenbremse.

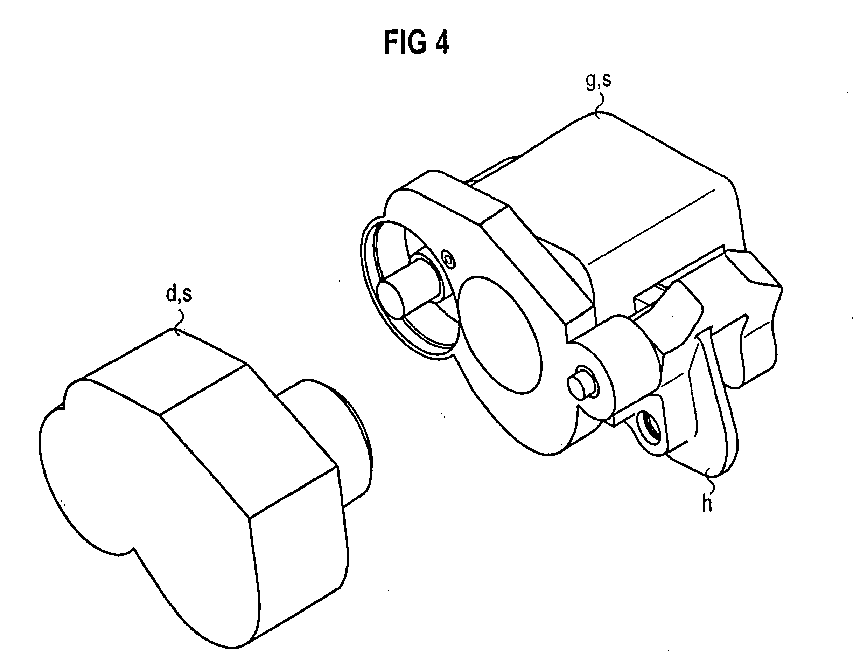

Der Deckel d ist mit dem Gehäuseteil g des Bremssattels s verschraubt (siehe Figuren 3 und 4).

## Patentansprüche

1. Modul einer elektromechanisch betätigbaren Scheibenbremse, umfassend:
ein Gehäuse, das durch einen einstückig ausgebildeten Deckel (d) eines Bremssattels (s) gebildet wird;
einen an einem Boden des Deckels (d) montierten Elektromotor, der einen Rotor (r) aufweist, der mit einem Ende um eine erste Achse (a1) drehbar am Boden des Deckels (d) gelagert ist, wobei die erste Achse (a1) im wesentlichen senkrecht zum Boden des Deckels (d) verläuft, sowie einen Stator (st), der mit dem Deckel (d) fest verbunden ist;
einen am Deckel (d) um eine zweite Achse (a2) drehbar aber nicht verschiebbar gelagerten ersten Teil eines Spindelgetriebes, dessen Lager (Ir3) mit dem Boden des Deckels (d) fest verbunden ist, wobei die zweite Achse (a2) im wesentlichen senkrecht zum Boden des Deckels (d) verläuft und von der ersten Achse (a1) beabstandet ist; und
ein Stirnradgetriebe zum Umwandeln der Drehbewegung des Rotors (r) in eine Drehbewegung des ersten Teils des Spindelgetriebes.

2. Modul nach Anspruch 1, mit einem Betätigungselement, das mindestens durch einen zweiten Teil des Spindelgetriebes gebildet wird, der durch Drehung des ersten Teils des Spindelgetriebes in eine Linearbewegung entlang der zweiten Achse (a2) versetzbar ist.

3. Modul nach Anspruch 1 oder 2, mit einer Sensorik und einer elektronischen Regelungseinheit, die am Boden des Deckels (d) montiert sind.

4. Modul nach Anspruch 3, bei dem die Sensorik einen Kraftsensor (k) aufweist, der zwischen dem Lager (Ir3) des ersten Teils des Spindelgetriebes und dem Boden des Deckels (d) angeordnet ist und derart ausgelegt ist, dass er die Kraft misst, die das Lager (Ir3) des ersten Teils des Spindelgetriebes auf den Boden des Deckels (d) ausübt.

5. Modul nach Anspruch 3 oder 4, bei dem die Sensorik einen Elektromotorrotorlagegeber (e) aufweist.

6. Modul nach einem der Ansprüche 1 bis 5,
bei dem das Stirnradgetriebe mindestens aus einem am Rotor (r) befestigten Rotorzahnrad (zr), einem am ersten Teil des Spindelgetriebes befestigten Spindelgetriebezahnrad (zs), einem ersten Zwischenzahnrad (z1), das in das Rotorzahnrad (zr) eingreift und einen größeren Außendurchmesser aufweist als das Rotorzahnrad (zr), und einem zweiten Zwischenzahnrad (z2), das einen kleineren Außendurchmesser aufweist als das erste Zwischenzahnrad (z1) und als das Spindelgetriebezahnrad (zs), besteht,
bei dem das erste Zwischenzahnrad (z1) und das zweite Zwischenzahnrad (z2) auf derselben am Boden des Deckels (d) gelagerten Zwischenwelle (zw) angeordnet sind.

7. Elektromechanisch betätigbare Scheibenbremse mit einem Modul nach einem der Ansprüche 1 bis 6,
mit einem Gehäuseteil (g) des Bremssattels (s), in dem zwei Bremsbeläge (bb1, bb2) angeordnet sind,
bei der der Deckel (d) mit dem Gehäuseteil (g) verbunden ist,
mit einem Betätigungselement, das mindestens durch einen zweiten Teil des Spindelgetriebes gebildet wird, der durch Drehung des ersten Teils des Spindelgetriebes in eine Linearbewegung entlang der ersten Achse (a1) versetzbar ist,
bei der das Betätigungselement an einen der Bremsbeläge (bb1) angrenzt, so dass eine Linearbewegung des Betätigungselements auf den Bremsbelag (bb1) übertragen wird.

8. Scheibenbremse nach Anspruch 7, bei der der Bremssattel (s) als Schwimmsattel ausgebildet ist.

9. Scheibenbremse nach Anspruch 8,
mit einem Halter (h), der mindestens einen Sattelführungsbolzen (f1) aufweist, entlang dem der Bremssattel (s) verschiebbar gelagert ist,
wobei der Rotor (r) des Elektromotors zumindest teilweise koaxial um den Sattelführungsbolzen (f1) angebracht ist.

10. Scheibenbremse nach einem der Ansprüche 7 bis 9, bei der am Gehäuseteil (g) ein weiteres Lager (Ir1) montiert ist, in dem der Rotor (r) an einem anderen Ende gelagert ist.

## Claims

1. Module of an electromechanically operable disk brake, comprising:
a housing formed by a one-piece cover (d) of a brake caliper (s);
an electric motor mounted on a base of the cover (d), said electric motor having a rotor (r) supported at one end on the base of the cover (d) so as to be rotatable about a first axis (a1), the first axis (a1) being substantially perpendicular to the base of the cover (d), as well as a stator (st) fixedly connected to the cover (d);
a first portion of a spindle drive non-displaceably supported on the cover (d) so as to be rotatable about a second axis (a2), the bearing (Ir3) of which first portion of the spindle drive is fixedly connected to the base of the cover (d), the second axis (a2) being substantially perpendicular to the base of the cover (d) and being spaced from the first axis (a1); and
a spur gear unit for converting the rotary motion of the rotor (r) into a rotary motion of the first portion of the spindle drive.

2. Module according to claim 1, having an operating element formed at least by a second portion of the spindle drive, wherein, through rotation of the first portion of the spindle drive, said second portion can be set in linear motion along the second axis (a2).

3. Module according to claim 1 or 2, having a sensor system and an electronic control unit, said sensor system and electronic control unit being mounted on the base of the cover (d).

4. Module according to claim 3, wherein the sensor system has a force sensor (k) disposed between the bearing (Ir3) of the first portion of the spindle drive and the base of the cover (d) and designed so as to measure the force exerted on the base of the cover (d) by the bearing (Ir3) of the first portion of the spindle drive.

5. Module according to claim 3 or 4, wherein the sensor system has an electric motor rotor position sensor (e).

6. Module according to any one of claims 1 to 5,
wherein the spur gear unit consists at least of a rotor gearwheel (zr) attached to the rotor (r); a spindle drive gearwheel (zs) attached to the first portion of the spindle drive; a first intermediate gearwheel (z1) engaging the rotor gearwheel (zr) and having a larger outside diameter than the rotor gearwheel (zr); and a second intermediate gearwheel (z2) having a smaller outside diameter than the first intermediate gearwheel (z1) and than the spindle drive gearwheel (zs);
wherein the first intermediate gearwheel (z1) and the second intermediate gearwheel (z2) are disposed on the same intermediate shaft (zw) supported on the base of the cover (d).

7. Electromechanically operable disk brake with a module according to any one of claims 1 to 6, having
a housing portion (g) of the brake caliper (s) accommodating two brake pads (bb1, bb2), wherein the cover (d) is connected to the housing portion (g); and
an operating element formed at least by a second portion of the spindle drive, wherein, through rotation of the first portion of the spindle drive, said second portion can be set in linear motion along the first axis (a1);
wherein the operating element abuts one of the brake pads (bb1) so that a linear motion of the operating element is transmitted to the brake pad (bb1).

8. Disk brake according to claim 7, wherein the brake caliper (s) is in the form of a floating caliper.

9. Disk brake according to claim 8, having
a bracket (h) having at least one caliper guide pin (f1) along which the brake caliper (s) is displaceable;
wherein the rotor (r) of the electric motor is at least partially coaxial about the caliper guide pin (f1).

10. Disk brake according to any one of claims 7 to 9, wherein mounted on the housing portion (g) is a further bearing (Ir1) in which the rotor (r) is supported at another end.

## Revendications

1. Module de frein à disque à actionnement électromécanique, comprenant :
un boîtier qui est formé par un couvercle (d), réalisé d'une seule pièce, d'un étrier de frein (s) ;
un moteur électrique, monté sur un fond du couvercle (d), qui comporte un rotor (r) lequel est monté par une extrémité, sur le fond du couvercle (d,) de manière à pouvoir tourner autour d'un premier axe (a1), le premier axe (a1) s'étendant sensiblement perpendiculairement au fond du couvercle (d), ainsi qu'un stator (st) solidaire du couvercle (d) ;
une première partie d'un mécanisme à vis montée sur le couvercle (d) de manière à pouvoir tourner autour d'un second axe (a2) mais à ne pouvoir coulisser , dont le palier (lr3) est solidaire du fond du couvercle (d), le second axe (a2) s'étendant sensiblement perpendiculairement au fond du couvercle (d) et étant espacé du premier axe (a1) ; et
un engrenage droit pour convertir le mouvement de rotation du rotor (r) en un mouvement de rotation de la première partie du mécanisme à vis.

2. Module selon la revendication 1 avec un élément d'actionnement qui est formé au moins par une seconde partie du mécanisme à vis, laquelle peut être déplacée, par rotation de la première partie du mécanisme à vis, en un mouvement linéaire le long du second axe (a2).

3. Module selon la revendication 1 ou 2 avec un dispositif de détection et une unité de régulation électronique qui sont montés sur le fond du couvercle (d).

4. Module selon la revendication 3, dans lequel le dispositif de détection comporte un capteur de force (k) qui est disposé entre le palier (Ir3) de la première partie du mécanisme à vis et le fond du couvercle (d), et est conçu de manière à mesurer la force que le palier (lr3) de la première partie du mécanisme à vis exerce sur le fond du couvercle (d).

5. Module selon la revendication 3 ou 4 dans lequel le dispositif de détection comporte un transmetteur (e) de position du rotor du moteur électrique.

6. Module selon l'une des revendications 1 à 5,
dans lequel l'engrenage droit est constitué au moins d'une roue dentée de rotor (zr) fixée au rotor (r), d'une roue dentée de mécanisme à vis (zs) fixée à la première partie du mécanisme à vis, d'une première roue dentée intermédiaire (z1) qui s'engage dans la roue dentée de rotor (zr) et présente un plus grand diamètre extérieur que la roue dentée de rotor (zr), et d'une seconde roue dentée intermédiaire (z2) qui présente un plus petit diamètre extérieur que la première roue dentée intermédiaire (z1) et que la roue dentée de mécanisme à vis (zs),
dans lequel la première roue dentée intermédiaire (z1) et la seconde roue dentée intermédiaire (z2) sont disposées sur le même arbre intermédiaire (zw) monté sur le fond du couvercle (d).

7. Frein à disque à actionnement électromécanique avec un module selon l'une des revendications 1 à 6,
avec une partie de boîtier (g) de l'étrier de frein (s) dans laquelle sont disposées deux garnitures de frein (bb1, bb2),
dans lequel le couvercle (d) est relié à la partie de boîtier (g), avec un élément d'actionnement qui est formé au moins par une seconde partie du mécanisme à vis, laquelle peut être déplacée, par rotation de la première partie du mécanisme à vis, en un mouvement linéaire le long du premier axe (a1),
dans lequel l'élément d'actionnement est adjacent à l'une des garnitures de frein (bb1), ce qui fait qu'un mouvement linéaire de l'élément d'actionnement est transmis à la garniture de frein (bb1).

8. Frein à disque selon la revendication 7 dans lequel l'étrier de frein (s) est réalisé sous la forme d'un étrier flottant.

9. Frein à disque selon la revendication 8,
avec un support (h) qui comporte au moins un boulon de guidage d'étrier (f1) le long duquel l'étrier de frein (s) est monté coulissant,
le rotor (r) du moteur électrique étant placé au moins en partie coaxialement au boulon de guidage d'étrier (f1).

10. Frein à disque selon l'une des revendications 7 à 9 dans lequel sur la partie de boîtier (g) est monté un autre palier (lr1) dans lequel le rotor (r) est supporté à une autre extrémité.
